Europäisches Patentamt

European Patent Office

Office européen des brevets

(11) Publication number: **0 383 401**
**A1**

# EUROPEAN PATENT APPLICATION

(21) Application number: **90200331.8**

(22) Date of filing: **13.02.90**

(51) Int. Cl.5: **B60C 11/16**

(30) Priority: **14.02.89 JP 15311/89 U**

(43) Date of publication of application:
**22.08.90 Bulletin 90/34**

(84) Designated Contracting States:
**CH DE FR GB IT LI SE**

(71) Applicant: **YACHIYO MICRO SCIENCE COMPANY LIMITED**
**1-28-2, Kanda-Sudacho**
**Chiyoda-ku, Tokyo(JP)**

(72) Inventor: **Emura, Akira c/o Yachiyo Micro Sc. Co. Ltd.**
**1-28-2, Kanda-Sudacho**
**Chiyoda-ku, Tokyo(JP)**
Inventor: **Harada, Shuichi c/o Yachiyo Micro Sc. Co. Ltd.**
**1-28-2, Kanda-Sudacho**
**Chiyoda-ku, Tokyo(JP)**
Inventor: **Emura, Kazuya c/o Yachiyo Micro Sc. Co. Ltd.**
**1-28-2, Kanda-Sudacho**
**Chiyoda-ku, Tokyo(JP)**

(74) Representative: **Noz, Franciscus Xaverius, Ir. et al**
**Algemeen Octrooibureau P.O. Box 645**
**NL-5600 AP Eindhoven(NL)**

(54) **Enbedded type friction intensifying material.**

(57) Embedded type frictional force reinforcing material specialized in dispersing very hard material, which is harder than the surface material to be contacted, in the base material of which hardness is lower than the surface to be contacted.

*Fig 5.*

EP 0 383 401 A1

# FIELD OF THE INVENTION

This invention relates to an enbedded type friction intensifying material, more paticularly an enbedded type friction reinforcing material intensifying its frictional force due to enbedding the material in the earth contacting surface of a tire or a shoe sole, etc.

## BACKGROUND OF THE INVENTION

In a car tire, usually metal spikes are driven into the contacting surface to secure friction with a frozen road surface, and prevent a slipping phenomenon. Moreover, a studless tire is also developed using special material rubber which is not being hard at low temperature, or applying special tread pattern.

However, when a tire planted with metal spikes run on a road without freezing, the spikes will scrape off the road surface, and generates dusts, and this is becoming a large social dispute. On the other hand, a studless tire does not generate a dust pollution problem, however, it has only weak holding power on a frozen surface, and has been significantly inferior in antislipping function in comparison with a spike tire or a chain.

## SUMMARY OF THE INVENTION

The object of this invention is to provide an embedded type frictional force reinforcing material which can give sufficient frictional force without hurting the surface of material to be contacted such as a road.

And the other object is to offer an embedded type frictional force reinforcing material which can be easily attached later on an existing tire, etc.

Further more object is to offer an embedded type frictional force reinforcing material which can be easily attached not only on a car tire but on various members which need antislipping function such as a shoe sole or floor material.

## BRIEF DESCRIPTION OF THE DRAWING

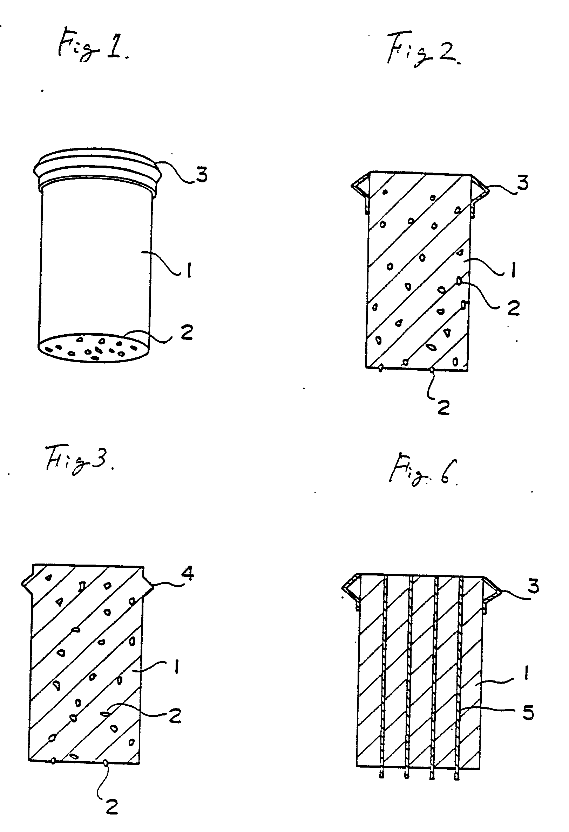

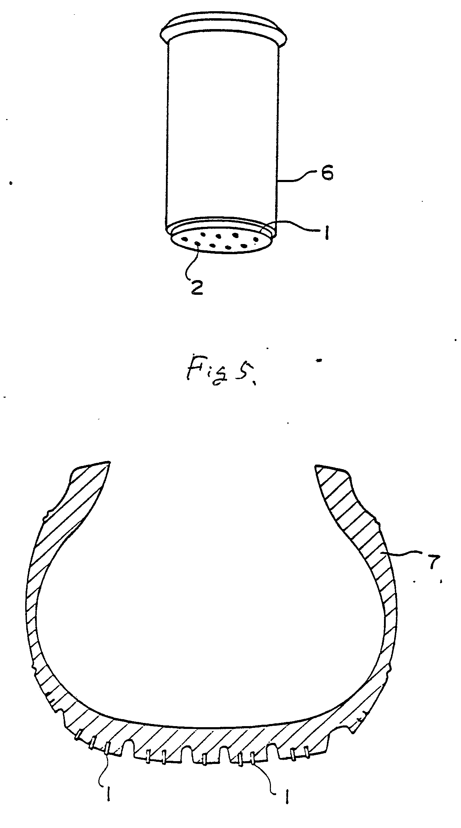

Fig.1 is a perspective view of an exemplary embodiment of this invention, Fig.2 is its sectional view, Fig.3 is a sectional view of another exemplary embodiment, Fig.4 is a perspective view of further more exemplary embodiment, and Fig.5 is an enlarged partial sectional view of the tire to explain its installation condition. Fig.6 is a sectional view of further more exemplary embodiment.

## DETAILED DESCRIPTION OF THE PREFERRED EMBODIMENT

In Fig.1 and Fig.2, numeral 1 is base material of a column shape, in which very hard material small pieces 2 made of silicone carbide (SiC), alumunium oxide, garnet ore, small piece of carbite alloy, etc., are dispersed. The outer diameter of the base material 1 is preferable to be about several mm to 10 mm. As the base material 1, materials with lower hardness than the surface material to be contacted such as a road will be used, and synthetic resins such as urethane resin, epoxy resin, polyethylene, or soft metals such as aluminum or copper can be used as proper materials.

The grain size of the very hard material small piece 2 is preferable to be about 600 micron to 1,000 micron, and the form is preferable to have protrusion so that it may bite in the surface material to be contacted such as a road surface. Moreover, the surface of very hard material small piece 2 may be treated with coupling process to improve the appetency with the base material 1. Moreover, to increase the strength, reinforcing fibers such as ARAMIDO fiber, very fine stainless steel wire, carbon fiber, etc., may be mixed in the base material 1. The ratio of the base material 1 and the very hard material small piece 2 is preferable to be 9:1 to 7:3 in volume. Moreover, the hardness of surface of material to be contacted, base material and very hard material are as follows:
Very hard material > Surface to be contacted. > Base material

Moreover, a metallic ring 3 for preventing slip off is inserted to the bottom of the base material 1, preventing it to be slipped off from tire etc., during service. Moreover, slip off may be prevented by means of the increased diameter of wall at near the bottom 4 of the base material 1, instead of using such metallic ring 3 as shown in Fig.3, or the bottom of the base material 1 may fixed with adhesive. Moreover, it is possible to put the base material 1 in a casing 6 made of aluminum, etc., to retain the strength as shown in Fig.4.

On the other hand, Fig.6 is the sectional drawing of other exemplary embodiment. In this exemplary embodiment, fine wire 5 of higher hardness than the surface material to be contacted is used instead of very hard material small piece, and plural number of fine wires 5 are positioned in axial direction. As for the material of fine wire 5, steel wire, ceramics, etc., can be used. The other parts are the same with above exemplary embodiment and the description is omitted.

This embedded type frictional force intensifying material is to be used through burying in the ground contacting surface side of the objective to reinforce the frictional force such as tire, so that the .end of such material will expose from the above ground contacting surface, and because the column state base material 1 has lower hardness than the surface to be contacted, it will successively wear due to the contact, and the very hard material small piece 2 or fine wire 5 exposes from it, and bites into the contacting surface such as road and performs grip action.

Therefore, it has sufficient frictional force even on a frozen road, and performs the same antislipping functions as the conventional spike tires.

On the other hand, because the very hard material which plays a central role to give frictional force is made to small pieces or fine wires, they do not scrape off the road as spikes do nor do not generate dust pollution.

Moreover, they can be simply attached later to the tire, etc., and are excellent in economy. Further it can be simply attached not only to the tire but to various components necessary to prevent slipping such as a shoe sole, floor material, etc., and is excellent for general use, and is very useful material for practical use as frictional force intensifying material.

## Claims

(1) Embedded type frictional force reinforcing material specialized in dispersing very hard material, which is harder than the surface material to be contacted, in the base material of which hardness is lower than the surface to be contacted.

(2) Embedded type frictional force reinforcing material specialized in placing plural number of fine wires of hard material, which are harder than the surface to be contacted, in the axial direction in the base material of which hardness is lower than the surface material to be contacted.

Fig 1.

Fig 2.

Fig 3.

Fig. 6.

6

1

2

Fig 5.

7

1

1

| Category | Citation of document with indication, where appropriate, of relevant passages | Relevant to claim | CLASSIFICATION OF THE APPLICATION (Int. Cl.⁵) |
|---|---|---|---|
| **DOCUMENTS CONSIDERED TO BE RELEVANT** | | | EP 90200331.8 |
| X | DE - A - 2 165 744 (SHELL INTERNATIONAL RESEARCH MAATSCHAPPIJ N.V.) * Page 2, lines 3-6; page 3, lines 28-34 * | 1 | B 60 C 11/16 |
| X | CH - A - 565 055 (ERFINOR AG) * Totality * | 2 | |
| A | DE - A1 - 3 122 792 (TECHNOLOGY INTERTRADE EST.) * Abstract; fig. 2,3 * | 2 | |
| | | | **TECHNICAL FIELDS SEARCHED (Int Cl.⁵)** |
| | | | B 60 C |

The present search report has been drawn up for all claims

| Place of search | Date of completion of the search | Examiner |
|---|---|---|
| VIENNA | 24-04-1990 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82